# FASCICULE DE BREVET EUROPEEN

(11) **EP 3 320 778 B1**
(45) Date de publication et mention de la délivrance du brevet: **09.01.2019**
(21) Numéro de dépôt: 17199641.6
(22) Date de dépôt: 02.11.2017
(51) Int. Cl.: A21B 3/02

(54) **FOUR COMPRENANT DES MOYENS D'ÉTANCHÉITÉ**
OFEN, DER ABDICHTUNGSMITTEL UMFASST
FURNACE COMPRISING SEALING MEANS

(30) Priorité: 10.11.2016 EP 16306473
(43) Date de publication de la demande: 16.05.2018
(73) Titulaire: Bongard SAS, 67810 Holtzheim (FR)
(72) Inventeur: BADER, Daniel, 67810 Holtzheim (FR)
(74) Mandataire: Kessler, Marc

(56) Documents cités:
- EP-A1- 2 630 865
- EP-A1- 2 765 861
- WO-A2-2013/053821
- AT-B- 391 979
- DE-A1-102011 002 731
- DE-U1-202008 016 182
- US-A1- 2006 102 164

## Description

### Objet de l'invention

La présente invention se rapporte à un four comprenant une plateforme, en particulier un four à soles, comprenant des moyens d'obturation de l'enceinte de cuisson coopérant avec des moyens d'étanchéité.

### Etat de la technique

Traditionnellement, les fours, qu'ils soient industriels ou ménagers, en particulier les fours de boulangerie, fonctionnent sous pression atmosphérique. Ils comprennent une enceinte recevant les produits devant subir un traitement thermique, ainsi que des moyens de production de chaleur, qui peuvent être disposés à l'intérieur ou à l'extérieur de l'enceinte de cuisson.

Généralement, l'enceinte est faite d'un matériau réfractaire et les moyens de production de chaleur, qui peuvent être directs ou indirects, mettent en oeuvre soit la combustion d'un combustible, tel le gaz, le fioul ou le bois, soit une résistance électrique, ou bien le rayonnement solaire pour ce qui concerne les fours solaires.

L'enceinte comprend une ouverture par laquelle les produits à traiter thermiquement sont enfournés ce qui génère_de fortes déperditions de chaleur. C'est pourquoi, il a été proposé d'obturer l'enceinte de cuisson à l'aide de moyens d'obturation mobiles, une porte ou une vitre, éventuellement amovibles, ce qui présente également l'avantage de maintenir dans le four les éventuelles fumées produites lors de la cuisson. Malgré cela, les déperditions de chaleur restent importantes et, pour ce qui concerne les fours mettant en oeuvre une cuisson en présence de vapeur, de fortes déperditions de vapeur sont également à déplorer.

Pour un four à chariot mobile, comme décrit dans le document US 2006/0102164, donc un four dépourvu de plateforme, il a été proposé d'obturer le compartiment de cuisson par une porte en deux parties, une première partie, supérieure, vitrée, et dont la surface du panneau interne entre en contact avec un joint d'étanchéité disposé sur le compartiment de cuisson, à la périphérie de son ouverture, et une seconde partie, inférieure, constituée d'une plaque d'étanchéité mobile dont la surface interne entre également en contact avec le joint d'étanchéité du compartiment de cuisson en l'absence du chariot de cuisson. En présence du chariot de cuisson, cette plaque d'étanchéité se positionne dans le prolongement de la paroi externe de la partie supérieure et c'est une plaque d'étanchéité du chariot qui vient en contact avec le joint d'étanchéité du compartiment de cuisson et avec un joint disposé sur la paroi interne de la partie supérieure de la porte.

Pour les fours comprenant des plateformes s'étendant devant l'ouverture de l'enceinte de cuisson, en particulier des fours à soles, comprenant une multitudes d'enceintes de cuissons, comme décrit par exemple dans le document EP2630865, il est connu d'obturer chaque enceinte par une porte pivotante ayant une position de maintenance permettant son nettoyage. En position fermée, la paroi extérieure de la porte vient en butée contre la plateforme disposée au niveau de l'ouverture des enceintes de cuisson. Cette solution présente l'inconvénient d'être, non seulement peu performante en termes d'étanchéité, mais également d'être très bruyante lorsque la porte vient buter contre la plaque en métal lorsqu'elle obture l'enceinte de cuisson. De même, le document US 2006/102164 A1 décrit un four comprenant des moyens de production de chaleur et une enceinte de cuisson.

De même, le document AT391979 décrit un four comprenant une multitude d'enceintes de cuisson comprenant une plateforme munie d'un bord formant une butée sur laquelle vient se positionner la paroi intérieure de la porte lors de l'obturation de l'enceinte de cuisson, la butée étant munie d'un joint d'étanchéité.

Par ailleurs, et pour un four à soles comprenant une plateforme s'étendant à l'intérieur de l'enceinte de cuisson, il est connu d'employer une butée au sein de la plateforme, afin que la paroi externe de la porte, en position fermée, s'appuie contre cette butée, comme cela est décrit dans le document WO2013053818. Il a été également proposé par le document WO2011023608, d'utiliser comme butée, non pas la plateforme de l'enceinte de cuisson, mais l'enceinte de cuisson elle-même, dont la circonférence intérieure comprend une garniture sur laquelle vient s'appuyer la paroi externe d'une porte, monté pivotante, lorsqu'elle est en position fermée.

Outre le fait que le nettoyage, de l'enceinte et de la butée de porte de tels fours, n'est pas aisé, de par la présence de résidus de cuisson et par la répétition des séquences d'ouvertures et fermetures de la porte, un tel joint de butée s'use rapidement, ce qui réduit son efficacité en termes de réduction des déperditions de chaleur et/ou de vapeur,

L'inconvénient du nettoyage peu aisé de l'enceinte du four se présente également pour ce qui concerne le four décrit dans le document US4503837. Dans ce document, le four comprend une porte sectionnelle coulissante, faite de trois compartiments. Afin de limiter les déperditions de chaleur, chaque compartiment comprend un joint fixé sur les bords latéraux, ainsi qu'un joint en forme de « Z », fixé sous le bord inférieur, et dont une extrémité s'étend dans une gorge en forme de « V ». La présence de ces trois gorges à l'entrée de l'enceinte rend le nettoyage de l'enceinte compliqué car les particules, les imbrulés, se trouvant dans l'enceinte viennent se loger dans les gorges. Pour y remédier, US4503837 propose l'utilisation de patins, fixés sur le bord inférieur de chaque porte, et coulissant dans les gorges pour les nettoyer et supprimer les particules et la saleté s'y trouvant. Toutefois, outre le fait que le système décrit dans US4503837 est complexe et que la tenue du joint sur le bord de la porte soit peu fiable, le nettoyage des ces trois gorges par les patins n'est pas très efficace et nécessite par conséquent une intervention manuelle supplémentaire. Par ailleurs, le four présente une forte déperdition de chaleur du fait de la présence de patins sous le bord inférieur du compartiment, de part et d'autre du joint d'étanchéité, créant une discontinuité de jointure et donc d'étanchéité.

### Buts de l'invention

La présente invention vise à fournir un four comprenant des moyens d'étanchéité qui ne présente pas les inconvénients de l'état de la technique.

La présente invention vise à fournir une alternative aux solutions de l'état de la technique existantes.

La présente invention vise à fournir un four présentant une déperdition réduite de chaleur, et éventuellement également de vapeur, qui soit de surcroit facile d'entretien et qui soit résistant à l'usure.

### Résumé de l'invention

La présente invention porte sur un four comprenant des moyens de production de chaleur, une ou plusieurs enceintes comprenant des moyens de réception d'un ou des produits à cuire, définissant un plan (P) sensiblement horizontal, une ouverture, une plateforme s'étendant devant l'ouverture, hors de l'enceinte ou des enceintes, et comprenant une surface continue, au moins un joint, affleurant ou ayant une partie affleurant la surface de la plateforme, des moyens d'obturation de l'ouverture comprenant une première et une seconde paroi, un bord inférieur, un bord supérieur et des bords latéraux, les moyens d'obturation étant aptes à passer d'une position dite « ouverte » à une position dite « fermée », et inversement, le bord inférieur des moyens d'obturation, lorsque ceux-ci sont dans la position « fermée », entrant en contact avec le joint, ou une partie du joint, qui affleure la surface de la plateforme.

Selon des modes préférés de l'invention, le dispositif de l'invention comprend au moins une, ou une combinaison quelconque appropriée, des caractéristiques suivantes :
- la plateforme comprend une partie proximale, proche de l'ouverture, une partie médiane, et une partie distale la plus éloignée de ladite ouverture, et comprend_le joint disposé au niveau de la partie distale ou médiane,
- la plateforme comprend une partie proximale, proche de l'ouverture, une partie médiane, et une partie distale la plus éloignée de ladite ouverture, et comprend_le joint disposé à l'extrémité de la partie proximale, le joint, ou une partie du joint, affleurant la plateforme et les moyens de réception d'un ou des produits à cuire,
- le joint comprend une arête s'étendant sensiblement perpendiculairement au plan formé par la plateforme et le long du joint, ou partie du joint, et dont un flan entre en contact avec la première paroi ou la seconde paroi des moyens d'obturation, quand ceux-ci sont dans la position « fermée »,
- le joint comprend en outre un bourrelet s'étendant sensiblement perpendiculairement au plan formé par la plateforme, et le long du joint, ou partie du joint, et dont une pente entre en contact avec une extrémité biaisée du bord inférieur des moyens d'obturation, quand ceux-ci sont dans la position « fermée »,
- le joint est disposé dans une gorge aux bords évasés,
- le joint, l'arête ou le bourrelet s'ils sont présents, comprennent ou sont faits de silicone,
- la plateforme s'étend sensiblement horizontalement dans le prolongement du plan (P) ou s'étend dans un plan oblique, formant avec le plan (P) un angle α compris entre 0,1 et 10 degrés, la plateforme comprenant une partie proximale, une partie médiane et une partie distale se trouvant, les unes par rapport à autres, dans un même plan, ou sensiblement dans un même plan,
- la plateforme comprend une partie proximale s'étendant depuis l'ouverture, sensiblement dans le prolongement du plan (P) ou s'étendant selon un plan oblique par rapport au plan (P) selon un angle α compris entre 0,1 et 10 degrés, une partie médiane s'étendant dans un plan parallèle, ou sensiblement parallèle, au plan (P), ou s'étendant selon un plan oblique par rapport au plan (P) selon un angle β qui est compris entre 0,1 et 10 degrés, une partie distale s'étendant dans un plan parallèle, ou sensiblement parallèle, au plan (P), ou s'étendant selon un plan oblique par rapport au plan (P) selon un angle γ qui est compris entre 0,1 et 10 degrés,
- le four comprend un joint supplémentaire venant en contact avec le bord supérieur des moyens d'obturation, lorsque ceux-ci sont dans la position « fermée »,
- le joint supplémentaire comprend une section transversale carrée ou rectangle, et le contact avec les moyens d'obturation se fait par l'extrémité plane ou biaisée du bord supérieur,
- les moyens d'obturation sont aptes à pivoter selon un axe de pivotement et passent de la position « ouverte » à la position « fermée », et inversement, par un mouvement battant,
- les moyens de réception d'un ou des produits à cuire comprennent au moins une sole,
- le four est un four de boulangerie comprenant une multitude d'enceintes identiques, disposées les unes sur les autres et fermées par des moyens d'obturation distincts pour chaque enceinte.

### Brève description des figures

La figure 1 est une vue schématique en coupe d'un côté d'un premier mode de réalisation du four selon l'invention.
La figure 2 est une vue schématique en coupe du mode de réalisation de la figure 1 sans les moyens d'obturation.
La figure 3 représente une vue schématique en coupe de la partie inférieure du four selon le mode de réalisation des figures 1 et 2.
La figure 4 représente une vue schématique en coupe représentant un mode de réalisation particulier du contact entre le bord inférieur des moyens d'obturation et le joint selon l'invention pour le mode de réalisation de figures 1 et 2.
La figure 5 représente une vue schématique en coupe représentant un mode de réalisation particulier du contact entre le bord supérieur des moyens d'obturation et le joint supplémentaire selon l'invention pour le mode de réalisation de figures 1 et 2.
La figure 6 est une vue schématique en coupe d'un côté d'un second mode de réalisation du four selon l'invention sans représentation des moyens d'obturation.
La figure 7 est une vue schématique en coupe d'un côté d'un autre mode de réalisation de la plateforme du four selon l'invention.
La figure 8 est une vue schématique en coupe d'un côté d'un autre mode de réalisation de la plateforme du four selon l'invention.

### Description détaillée de l'invention

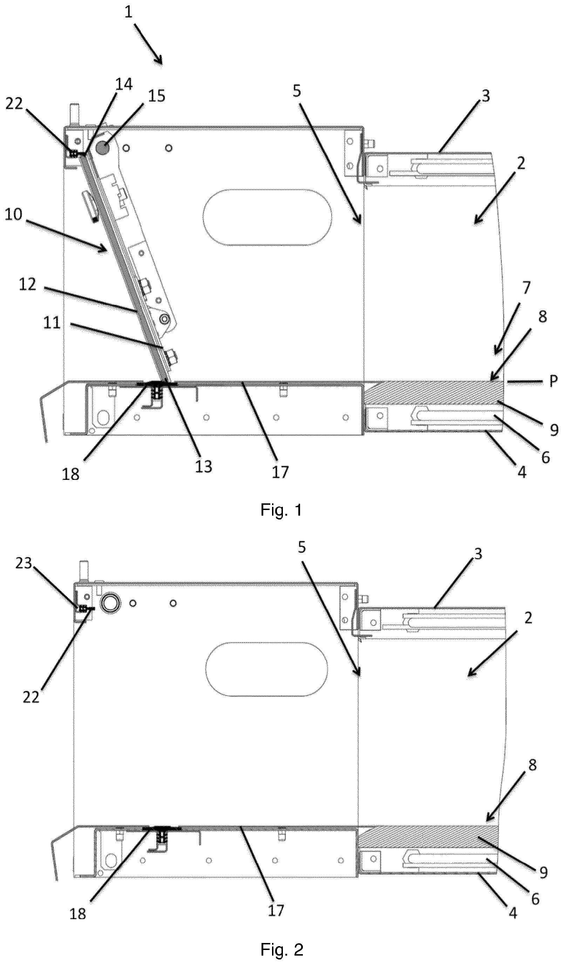

Dans la suite de la description et des revendications, les termes « avant », « arrière », « devant », « derrière », « supérieur », « inférieur », « vertical » ou « horizontal » font référence à la position normale d'utilisation du four 1 selon l'invention, comme représentées à la figure 1, et à la position normale d'utilisation des éléments constitutifs du four 1 lors de son utilisation normale.

Le four 1 selon l'invention comprend au moins une enceinte 2, dans laquelle se fait la cuisson d'un produit sous l'action de la chaleur. De préférence le four 1 comprend une multitude d'enceintes 2, disposées les unes sur les autres et/ou les unes à coté des autres, qui de préférence sont identiques, sensiblement identiques ou bien différentes, les unes aux autres.

De préférence, l'enceinte ou les enceintes 2 sont intégrées dans un bâti. Avantageusement, elle est ou elles sont intégrées dans une enceinte isolante, ou bien est ou sont recouvertes d'un matériau, ou une combinaison de matériaux, isolants thermiquement.

L'enceinte ou les enceintes 2 ont toutes formes et dimensions adéquates pour permettre la cuisson d'au moins un produit, de préférence d'une multitude de produits. L'enceinte ou les enceintes 2 sont faites de tous matériaux, ou assemblage(s) de matériaux, adéquats. Elles comprennent au moins une paroi supérieure 3, une paroi inférieure 4 et une ouverture 5.

L'ouverture 5 a une forme et des dimensions adéquates, permettant l'accès à tout ou partie de l'enceinte 2. L'ouverture 5 débouche sur la face dite « avant » du four 1, face par laquelle les produits à traiter thermiquement sont enfournés dans l'enceinte 2, la face opposée à cette face étant la face arrière du four.

Le four 1 comprend en outre des moyens 6 de production de chaleur aptes à porter l'enceinte 2 ou la multitude d'enceintes 2 à une température adéquate pour le traitement thermique d'au moins un produit. Ces moyens sont disposés de préférence à l'intérieur de l'enceinte 2, en partie inférieure et/ou en partie supérieure et/ou en partie avant et/ou au fond de l'enceinte 2. Néanmoins, ils peuvent également, ou de façon alternative, se trouver à l'extérieure de l'enceinte 2. Ils mettent en oeuvre soit la combustion d'un combustible, tel le gaz, le fioul ou le bois, soit une résistance électrique, ou bien le rayonnement solaire pour ce qui concerne les fours solaires. En outre, ils peuvent également mettre en oeuvre un fluide chauffant ou un flux d'air chaud.

De préférence, le four 1 comprend des moyens de contrôle et/ou des moyens de commande et/ou des moyens de programmation des moyens 6 de production de chaleur.

De préférence, l'enceinte 2 ou les enceintes 2 comprennent des moyens 7 de réception du ou des produits à traiter thermiquement, sur lesquels lesdits produits sont placés, et fournissant au moins une surface 8 de cuisson. Ces moyens 7, et donc la surface 8 de cuisson, définissent un plan (P), qui est parallèle, ou sensiblement parallèle à la paroi inférieur de l'enceinte 2.

Les moyens 7 de réception ont toutes formes et toutes dimensions compatibles avec celle de l'enceinte 2. De façon très simple, et pour le mode de réalisation dans lequel les moyens 6 de production de chaleur sont extérieurs à l'enceinte 2, les moyens 7 de réception peuvent comprendre, ou être, la paroi inférieure 4 de l'enceinte 2. Néanmoins, de préférence, il s'agira par exemple d'un ou plusieurs plateaux et/ou d'un ou plusieurs dispositifs réfractaires.

De préférence, les moyens 7 de réception sont fixes durant l'enfournement, le défournement des produits à cuire, leur nettoyage ou celui de l'enceinte 2, mais peuvent être mobiles durant la cuisson. De préférence, les moyens 7 de réception comprennent au moins une sole 9, qui présente l'avantage d'offrir une bonne stabilité et une homogénéité de la température diffusée par les moyens de production de chaleur dans l'enceinte 2.

Dans un mode de réalisation particulier de l'invention, les moyens 6 de production de chaleur sont disposés au dessus de la paroi inférieure 4 de l'enceinte 2 du four avec ou sans sole, de préférence sous une sole 9 disposée au-dessus de la paroi inférieure 4 et/ou sous la paroi supérieure 5 de l'enceinte 2 sous une seconde sole 9.

Le four 1 peut également comprendre des moyens de génération de vapeur d'un liquide, de préférence de vapeur d'eau, dans l'enceinte 2 et/ou des moyens de distribution de la vapeur dans l'enceinte 2.

De préférence, le four 1 comprend des moyens de brassage de l'atmosphère intérieure de l'enceinte 2, par exemple une turbine ou un ventilateur, et, éventuellement, des moyens d'évacuation de la chaleur et/ou de la vapeur présente dans l'enceinte 2, mis en oeuvre par des moyens manuels ou automatiques.

Le four 1 comprend en outre des moyens 10 d'obturation de l'enceinte 2, ayant une forme et des dimensions adéquats, de préférence qui sont fonctions de la forme et des dimensions de l'enceinte 2. Ces moyens 10 d'obturation sont aptes à passer, de façon pivotante ou glissante, d'une position dite « ouverte », dans laquelle l'enceinte 2 n'est pas obturée, à une position dite « fermée » dans laquelle les moyens d'obturation closent l'enceinte 2, et inversement. Par ailleurs, ces moyens peuvent adopter toutes les positions intermédiaires possibles entre la position « ouverte » et la position « fermée ». Dans le mode de réalisation du four 1 comprenant une multitude d'enceintes 2, chaque enceinte comprend ces propres moyens 10 d'obturation, qui peuvent être actionnés indépendamment les uns des autres et/ou de façon concomitante.

Ces moyens 10 d'obturation peuvent être disposés adjacents à l'ouverture 5 de l'enceinte 2 ou bien se situer devant l'ouverture 5, disposés au niveau d'un châssis s'étendant devant ladite ouverture 5 comme représenté à la figure 1.

Dans un mode de réalisation particulier de l'invention, les moyens 10 d'obturation sont faits d'une seule pièce obturant l'enceinte 2. Néanmoins, ils peuvent également comprendre au moins deux parties, de préférence une multitude de parties, pouvant être mises en oeuvre indépendamment les unes des autres, pour une obturation partielle de l'enceinte 2. De préférence, la multitude de parties comprend un joint disposé sur au moins un, de préférence au moins deux, de leurs bords, permettant d'obtenir une étanchéité améliorée entre deux parties adjacentes de ces moyens 10 d'obturation. De préférence, le joint d'un bord d'une première partie des moyens 10 vient en superposition du joint d'un bord d'une seconde partie, adjacente à la première. Avantageusement, le joint est fait de silicone.

Pour des moyens 10 d'obturation pivotants, qu'ils soient fait d'une ou plusieurs parties, l'axe de pivotement 15 peut être disposé en partie haute ou en partie basse de l'ouverture 5 ou du châssis, ou cadre, disposé et s'étendant devant l'ouverture 5 hors de l'enceinte 2 ou de chaque enceinte 2 et entourant la ou les ouvertures 5. La présence d'un tel châssis, ou cadre, présente l'avantage de gagner en hauteur et longueur d'enfournement des produits à cuire.

Les mouvements d'ouverture et de fermeture des moyens 10 d'obturation pivotants peuvent se faire selon un sens de rotation de l'extérieur vers l'intérieur du four 1 et/ou selon un sens de rotation contraire, de l'intérieur vers l'extérieur du four 1. Néanmoins, pour des moyens 10 d'obturation dont l'axe de pivotement 15 est disposé en partie basse, les mouvements d'ouverture et de fermeture se font de préférence de l'extérieur du four 1 vers l'intérieur du four 1, ce qui présente l'avantage de maximiser l'utilisation de la surface de cuisson 8, sans que les moyens 10 d'obturation viennent buter contre les produits à cuire ou contre les moyens 6 de production de chaleur.

Dans ces modes de réalisation, les moyens 10 d'obturation peuvent être sensiblement parallèles au plan formé par la surface de cuisson 8 en position « ouverte », et sensiblement perpendiculaires ou bien obliques par rapport au plan formé par la surface de cuisson 8 en position « fermée ». Les mouvements de passage de la position « ouverte » à celle « fermée » sont des mouvements battant d'avant en arrière et/ou inversement, selon un angle qui peut être compris entre 0° et 180°, ou selon un angle compris entre 0° et 90° ou entre 90° et 180°, par rapport au plan formé par la paroi inférieure de l'enceinte 2.

Pour des moyens 10 d'obturation glissants, ces moyens 10 peuvent obturer l'enceinte 2 par un mouvement de bas en haut, de haut en bas ou d'un coté à l'autre de l'ouverture 5 de l'enceinte 2 ou du châssis.

Quelque soit leurs modes de réalisation, les moyens 10 d'obturation comprennent au moins une première surface ou paroi 11, qui, lorsqu'ils sont en position « fermée », fait face à l'intérieur de l'enceinte 2 et une seconde surface, ou paroi 12, faisant face à l'extérieur de l'enceinte 2. Les moyens 10 d'obturation comprennent au moins un bord inférieur 13, un bord supérieur 14 et des bords latéraux. Dans le mode de réalisation dans lequel les moyens 10 d'obturation de l'ouverture 5 ont une forme sensiblement parallélépipédique, le bord inférieur 13, le bord supérieur 14 et les bords latéraux sont définis par rapport à la position des moyens 10 d'obturation lors de leur utilisation au sein du four 1 selon l'invention. Dans le mode de réalisation dans lequel les moyens 10 d'obturation ont une forme sensiblement circulaire, ovoïde ou oblongue, le bord inférieur 13, le bord supérieur 14 et les bords latéraux sont constitués chacun par au moins une partie du bord périphérique desdits moyens 10 et sont également définis par rapport à la position desdits moyens 10 lors de leur utilisation au sein du four 1 selon l'invention.

De préférence, et quelques soient les modes de réalisation des moyens 10 d'obturation, le bord inférieur 13 et éventuellement le bord supérieur 14 comprend ou comprennent une, de préférence, deux extrémités obliques, ou biaisées, formant un ou des points de contact ou d'appui.

De préférence, et quelques soient les modes de réalisation des moyens 10 d'obturation, les bords latéraux de ces moyens 10 comprennent au moins un joint s'étendant sur tout ou partie de la longueur de ces bords latéraux et entrant en contact avec les parois latérales de l'enceinte 2 ou le châssis, afin d'améliorer l'étanchéité de l'enceinte 2.

De préférence, les moyens 10 d'obturation comprennent, ou sont constitués, d'un ou plusieurs panneaux en métal, en composite, en céramique, d'une ou plusieurs vitres ou portes, éventuellement vitrées.

De préférence, les moyens 10 d'obturation, en particulier la ou les vitres ou portes, interagissent avec des moyens 16 de commande pour leur mise en oeuvre manuelle ou motorisée de chaque moyens 10 d'obturation indépendamment les uns des autres et/ou de façon concomitante. A titre d'exemple, les moyens 16 de commande peuvent comprendre une ou plusieurs poignées, disposées à tout endroit adéquat de la ou des portes ou vitres, ou peuvent comprendre un ou plusieurs moteurs permettant l'ouverture ou la fermeture des vitres ou portes. Ces moyens 16 de commande peuvent également permettre un fonctionnement automatique des moyens 10 d'obturation. Par exemple, ils peuvent comprendre, ou mettre en oeuvre, un détecteur, un senseur, détectant l'approche ou la présentation d'un produit à cuire, ou d'un dispositif d'enfournement, une spatule ou un enfourneur par exemple, devant ou à proximité des moyens 10 d'obturation.

De préférence, les moyens 10 d'obturation sont amovibles, ou bien ils peuvent prendre une ou plusieurs positions de maintenance pour faciliter leur entretien et leur nettoyage.

De préférence, les moyens 10 d'obturation coopèrent avec des moyens faisant office de ressort afin de ralentir les mouvements de battement ou de translation des moyens d'obturation.

De préférence, les moyens 10 d'obturation coopèrent avec des moyens de verrouillage des moyens d'obturation. A titre d'exemple, il peut s'agir d'un pêne ou tous moyens adéquats disposés en tous points adéquats des moyens d'obturation.

Le four 1 comprend en outre une plateforme 17, ou plaque d'accueil, s'étendant vers l'avant du four 1, devant l'ouverture 5, hors de l'enceinte 2 ou des enceintes 2, sous le châssis ou cadre s'il est présent, une plateforme 17 disposée adjacente à ladite ouverture 5. La plateforme 17 présente l'avantage de permettre de poser le produit à cuire, ou le produit en sortie de cuisson, ou d'être un appui pour des moyens d'enfournement, une spatule ou un enfourneur par exemple, et de permettre au produit à cuire ou cuit de glisser dans et hors de l'enceinte 2 ou des enceintes 2.

La plateforme 17 peut s'étendre sensiblement horizontalement dans le prolongement du plan (P) formé par la surface 8 de cuisson des moyens 7 de réception du ou des produits à cuire.

La plateforme 17 peut se décomposer en trois parties solidaires les unes des autres. Tout d'abord, la plateforme 17 peut comprendre une partie proximale 24, qui est la partie la plus rapprochée de l'ouverture 5 de l'enceinte 2, adjacente à l'ouverture 5. La plateforme 17 comprend une partie médiane 25, reliant la partie proximale 24 à une partie distale 26, et une partie distale 26, qui est la plus éloignée de l'ouverture 5.

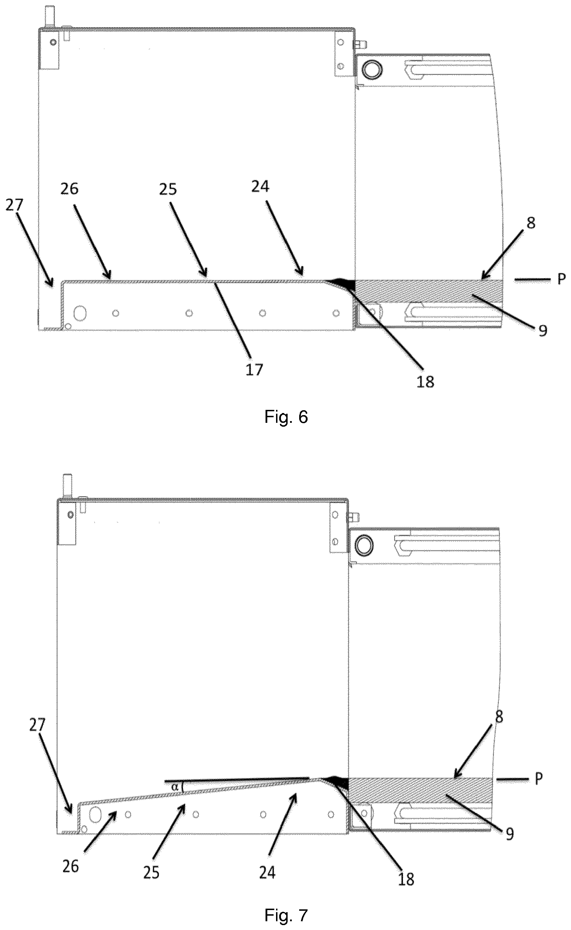

De préférence, les parties proximale 24, médiane 25 et distale 26, sont dans le même plan ou sensiblement dans le même plan (figure 6).

De préférence, l'extrémité 27 de la partie distale 26 de la plateforme comprend une paroi s'étendant vers le bas sensiblement perpendiculaire au plan de la plateforme 17. Avantageusement, l'extrémité 27 a une section longitudinale en forme de « L » (figures 6 à 8).

Dans un autre mode de réalisation représenté à la figure 7, la plateforme 17 peut s'étendre selon un plan oblique par rapport au plan (P), selon une pente descendante à mesure que la plateforme 17 s'éloigne de l'ouverture 5 ; Ainsi, la partie proximale 24 de la plateforme 17, proche de l'ouverture 5, se trouve au niveau, ou sensiblement au niveau, des moyens 7 de réception, au niveau du plan (P), et l'extrémité de la partie distale 26 de la plateforme se trouve sous le plan (P). De préférence, ce plan oblique forme, avec le plan (P), un angle a, de préférence, compris entre 0,1 et 10 degrés, avantageusement entre 1 et 5 degrés.

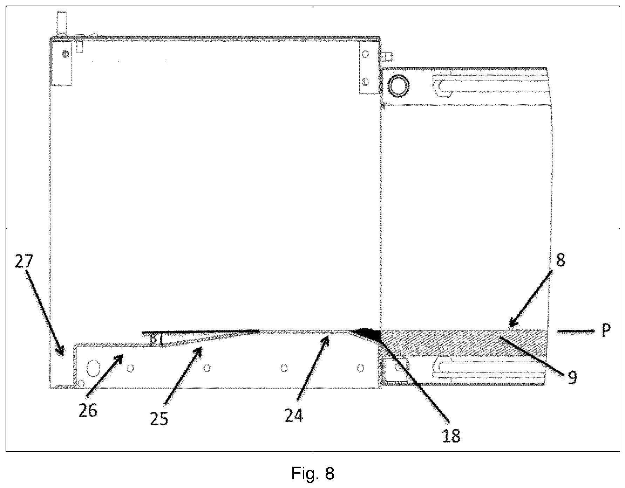

Dans un autre mode de réalisation, la plateforme 17 peut comprendre une partie proximale 24 s'étendant dans un plan parallèle, ou sensiblement parallèle, au plan (P), ou dans un plan oblique au plan (P), de préférence selon l'angle a, de préférence, compris entre 0,1 et 10 degrés, avantageusement entre 1 et 5 degrés, la partie médiane 25 s'étendant dans le prolongement du plan (P) ou s'étendant selon une pente descendante, de façon oblique, dans un plan formant un angle β avec le plan (P), l'angle β étant compris entre 0,1 et 10 degré, avantageusement entre 1 et 5 degrés, avec une partie distale s'étendant dans un plan parallèle, ou sensiblement parallèle, au plan (P), de préférence s'étendant dans le même plan que la partie médiane 25 ou proximale 24, ou s'étendant en pente descendante, selon un plan oblique par rapport au plan (P) selon un angle γ qui est compris entre 0,1 et 10 degrés, avantageusement entre 1 et 5 degrés (figure 8).

Les angles a, β, γ peuvent être identiques ou différents entre eux.

La ou les pentes relativement douce(s) des parties proximale 24, médiane 25 et/ou distale 26 de la plateforme 17, à savoir des angles α, β, et/ou γ ayant un angle maximal de 5 ou 10 degrés avec le plan (P) des moyens 7 de réception, présente(nt) l'avantage de faciliter l'élimination des saletés présentes dans l'enceintes 2 et/ou sur la plateforme 17.

Quelque soient les modes de réalisation de la plateforme 17, tout ou partie de cette dernière est lisse ou ondulée. De plus, la plateforme 17 fournie une surface continue devant l'ouverture 5 de l'enceinte 2, ce qui présente l'avantage d'améliorer son entretien et son nettoyage et donc également le nettoyage de l'enceinte 2 du four 1. Cette continuité de surface est également présente pour une plateforme 17 dont la partie proximale, la partie distale, et éventuellement la partie médiane, forment des plans différents. Pour cela, les différentes parties de la plateforme 17 peuvent être obtenues, de préférence, par le pliage d'une plaque d'un seul tenant, sans la formation d'arêtes vives, mais dans laquelle la ou les jonctions entre les différentes parties (proximale, médiane, distale) sont arrondies.

Le four 1 comprend en outre un joint 18 coopérant avec les moyens 10 d'obturation. Dans le four 1, il y a autant de joints 18 que de moyen 10 d'obturation et donc que d'enceintes 2. Le ou les joints 18 présentent l'avantage de diminuer, de préférence supprimer, les déperditions de chaleur, éventuellement également de vapeur, de ou des enceintes 2, et de maintenir dans le four 1 les éventuelles fumées produites lors de la cuisson, pour un scellement hermétique de ou des enceintes 2. Ce joint 18 présente également l'avantage de réduire, voir d'éliminer, les bruits de claquement des moyens 10 d'obturation lorsqu'ils passent de la position « ouverte » à la position « fermée ».

Le joint 18 est disposé affleurant, ou comprend une partie qui affleure, la surface de la plateforme 17, le joint 18 étant disposé a tout endroit adéquat de la plateforme 17 permettant une coopération avec les moyens 10 d'obturation, qu'ils soient faits d'un seul tenant ou de plusieurs parties. Ainsi, le joint peut s'étendre sur tout ou partie de la largeur de la plateforme 17 et peut être disposé au niveau de sa partie distale 26, ou sa partie médiane 25, ou sa partie proximale 24, ou au niveau des jonctions entre la partie distale 26, médiane 25 ou proximale 24.

De préférence, le joint 18, ou une partie du joint 18, comprend une surface se trouvant dans le plan formé par la plateforme 17 ou par la partie de la plateforme 17 dans laquelle il se trouve.

Dans un mode de réalisation préféré, le joint 18 est disposé dans la partie proximale 24 de la plateforme, adjacent et le long du bord des moyens 7 de réception des produits à cuire. Toutefois, le joint 18 peut également être disposé dans la partie médiane 25 ou distale 26, ce qui présente l'avantage de ne pas exposer le joint 18 aux températures pouvant régner dans l'enceinte 2 lors de l'utilisation du four 1.

De préférence, le joint 18 est disposé dans tout ou partie d'une gorge 20 ou de l'espace formé entre ces moyens 7 et la plateforme 17.

Au surplus du gain d'étanchéité, le joint 18 selon l'invention présente l'avantage de permettre un nettoyage facilité de l'intérieur de l'enceinte 2, en particulier des moyens 7 de réception des produits à cuire, de la surface 8 de cuisson, la paroi inférieure 4 ou la sole 9, et de la plateforme 17, ce qui réduit, voir supprime, les risques d'usure prématurée du joint 18 par les particules et résidus de cuisson, le joint 18 gardant ainsi son efficacité plus longtemps.

Le joint 18 peut comprendre en outre une arête ou un bourrelet 19, s'étendant, de préférence à une hauteur de moins de 10 mm, sensiblement perpendiculairement à, et le long de, la surface ou partie du joint 18, affleurant à la plateforme 17. L'arête ou le bourrelet 19, au moins le sommet du bourrelet 19, présentent l'avantage de faire office de butée sur laquelle viennent en contact les moyens 10 d'obturation, de préférence par l'intermédiaire d'une des parois 11 ou 12.

Dans les modes de réalisation dans lesquels le joint 18 comprend une arête ou un bourrelet 19, la partie affleurante du joint 18 peut être tout ou partie de l'arête ou du bourrelet 19, en particulier le sommet du bourrelet 19, comme représenté par exemple aux figures 1 à 3, ou la partie affleurante du joint 18 peut être la base du joint 18, à partir de laquelle l'arête ou le bourrelet 19 s'étend, comme représenté par exemple aux figures 6 à 8.

Les moyens 10 d'obturation lorsqu'ils sont en position fermée, engagent le joint 18, ou au moins une partie du joint 18, par leur bord inférieur 13. Le joint 18 selon l'invention n'engage pas un autre joint ou partie de joint qui serait disposé sur les moyens 10 d'obturation, en particulier sur la première paroi 11 ou la seconde paroi 12.

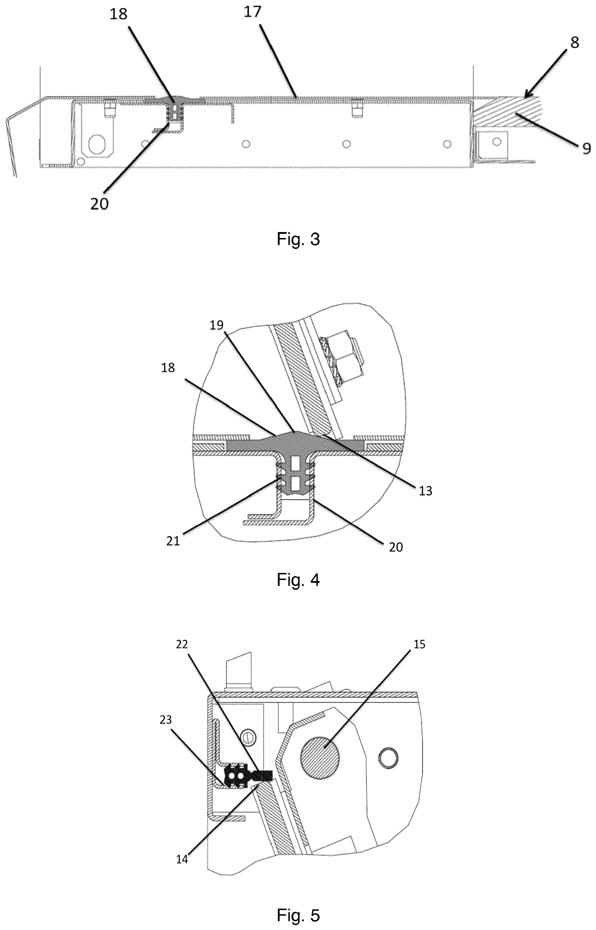

Dans le mode de réalisation dans lequel le bord inférieur 13 est de section carrée ou rectangulaire, les moyens 10 d'obturation entrent en contact avec la surface du joint 18, ou partie du joint 18, affleurant, par son extrémité plan. Pour un joint 18 comprenant en outre une arête ou un bourrelet 19, les moyens 10 d'obturation entrent en contact avec le flan de l'arête ou la pente du bourrelet 19 avec au moins une partie de la première paroi 11 ou de la seconde paroi 12, ce qui présente l'avantage d'améliorer encore l'herméticité de l'enceinte 2. Pour un joint 18 comprenant un bourrelet 19, les moyens 10 d'obturation entrent en contact, de préférence, avec le joint 18, en particulier avec une pente du bourrelet 19, par l'extrémité du bord inférieur 13 qui comprend avantageusement au moins un bord biaisé, oblique (figure 4).

De préférence, le joint 18 comprend un, ou est fait d'un matériau ou ensemble de matériaux, facilement nettoyable et résistant aux températures d'utilisation du four 1. Le joint 18, ou la partie du joint 18, entrant en contact avec le bord inférieur 13 des moyens 10 d'obturation, éventuellement également l'arête et/ou le bourrelet 19, sont suffisamment compressibles et résiliant afin de permettre un contact étroit pour réaliser l'étanchéité. De préférence, le joint 18 est fait de silicone.

Dans le mode de réalisation dans lequel, les moyens 10 d'obturation passent de la position ouverte à la position fermée par un mouvement glissant, le bord inférieur 13 engage le joint 18 à l'une de ces extrémités, de préférence par une partie biaisée du bord inférieur 13, et glisse sur la surface du joint 18, ou partie du joint 18, affleurant, éventuellement le long de l'arête ou de la pente du bourrelet 19.

Dans le mode de réalisation dans lequel, les moyens 10 d'obturation passent de la position ouverte à la position fermée par un mouvement battant, de pivot, le bord inférieur 13 engage le joint 18, de préférence par l'une ou l'autre de son extrémité biaisée, en exerçant une force sur le joint, qui se comprime et, grâce à sa résilience, exerce à son tour une force contre le bord inférieur 13 des moyens 10 d'obturation. Dans les modes de réalisation dans lesquels le joint 18 comprend une l'arête ou le bourrelet 19, ces derniers sont, de préférence, suffisamment compressibles et présentent une résilience compatibles afin de permettre le battement des moyens 10 d'obturation dans un mouvement compris entre environ 0° et 180°.

De préférence, et afin que le mouvement battant se fasse sans obstruction, la surface de la plateforme 17 autour du joint 18 présente une partie oblique, en l'occurrence, l'espace ou la gorge 20 recevant le joint 18 comprend des extrémités évasées. Cela permet à la partie du joint 18 affleurant et/ou à l'arête ou au bourrelet 19 d'être moins compressibles et résiliant, augmentant ainsi le caractère hermétique du contact entre le bord inférieur 13 et le joint 18.

De préférence, le joint 18 a une section transversale en forme de « T », ou bien sensiblement circulaire, oblongue ou ovoïde, parallélépipédique, carrée ou rectangle.

Le joint 18 est maintenu en place sur ou dans la plateforme 17 par des moyens de fixation, de préférence pour une fixation réversible. De préférence, ces moyens permettent un engagement de force du joint 18 dans tout ou partie, en particulier la gorge 20, de la plateforme 17. Avantageusement, le joint 18, ou une partie du joint 18, comprend des ailettes 21 ou un pas de vis fileté, ou tous autres moyens équivalents. De façon alternative, ces moyens peuvent comprendre une colle.

De préférence, le four 1 comprend en outre un joint 22 supplémentaire venant en contact avec le bord supérieur 14 des moyens 10 d'obturation, lorsque ces moyens 10 d'obturation sont en position « fermée ».

Le joint 22 présente l'avantage d'améliorer l'herméticité de l'enceinte 2, en particulier en complément du joint 18, tout en réduisant, ou éliminant, les bruits de claquement des moyens 10 d'obturation lorsqu'ils passent de la position « ouverte » à la position « fermée ».

De préférence, le joint 22, ou la partie du joint 22 entrant en contact avec les moyens 10 d'obturation, a une section transversale sensiblement circulaire, oblongue ou ovoïde. Avantageusement la section transversale est parallélépipédique, carrée ou rectangle, et le contact avec l'extrémité plan ou biaisé du bord supérieur 14.

De préférence, le joint 22 comprend un, ou est fait d'un, matériau ou ensemble de matériaux, résistant à la chaleur. Le joint 22, ou la partie du joint 22 entrant en contact avec le bord supérieur 14 des moyens 10 d'obturation, est suffisamment compressible et résiliant afin de permettre un contact étroit pour réaliser l'étanchéité.

De préférence, le joint 22 est fait du ou des mêmes matériaux que celui ou ceux du joint 18. Avantageusement, le joint 22 est fait de silicone.

De préférence, le joint 22 est disposé dans tout ou partie d'une gorge 23 pratiquée dans le châssis du four 1.

Le joint 22 est maintenu en place par des moyens de fixation, de préférence pour une fixation réversible. De préférence, ces moyens permettent un engagement de force du joint 22 dans tout ou partie d'une gorge 23. Avantageusement, le joint 22, ou une partie du joint 22, comprend des ailettes ou un pas de vis fileté ou tous autres moyens équivalents. De façon alternative, ces moyens peuvent comprendre une colle.

De préférence, le four 1 comprend en outre des moyens d'enfournement, de préférence mobiles en translation, aptes à amener le ou les produits à cuire dans l'enceinte 2. Il peut s'agir par exemple d'un enfourneur. Le four 1 peut également comprendre en outre un élévateur, mobile verticalement, en translation, et des moyens de déplacement pour déplacer verticalement les moyens d'enfournement devant l'enceinte 2 ou les enceintes 2.

De préférence, le four 1 comprend une hotte, faisant saillie depuis la section supérieure de la façade avant du four 1. De préférence, la hotte comprend un extracteur relié à une conduite afin d'évacuer la buée, la vapeur d'eau, ou les fumées émanant de l'enceinte 2 ou des enceintes 2.

De préférence, le four 1 selon l'invention est un four de boulangerie, mais il peut également s'agir d'un four ménager, encastrable ou faisant partie intégrante d'une cuisinière.

De préférence, les produits traités thermiquement par le four 1 selon l'invention sont des produits de boulangerie, comme par exemple du pain, des viennoiseries ou analogues.

## Revendications

1. Un four (1) comprenant des moyens (6) de production de chaleur, une ou plusieurs enceintes (2) comprenant des moyens (7) de réception d'un ou des produits à cuire, définissant un plan (P) sensiblement horizontal, une ouverture (5), une plateforme (17) s'étendant devant ladite ouverture (5), hors de ladite ou desdites enceintes (2) et comprenant une surface continue, au moins un joint (18), affleurant ou ayant une partie affleurant ladite surface de la plateforme (17), des moyens (10) d'obturation de ladite ouverture (5) comprenant une première et une seconde paroi (11 et 12), un bord inférieur (13), un bord supérieur (14) et des bords latéraux, lesdits moyens (10) d'obturation étant aptes à passer d'une position dite « ouverte » à une position dite « fermée », et inversement, ledit bord inférieur (13) desdits moyens (10) d'obturation, lorsque ceux-ci sont dans la position « fermée », entrant en contact avec ledit joint (18), ou ladite partie dudit joint (18), qui affleure la surface de la plateforme (17).

2. Le four (1) selon la revendication 1, dans lequel la plateforme (17) comprend une partie proximale (24), proche de l'ouverture (5), une partie médiane (25), et une partie distale (26) la plus éloignée de ladite ouverture (5), et comprend le joint (18) disposé au niveau de ladite partie distale (26) ou de ladite partie médiane (25).

3. Le four (1) selon la revendication 1, dans lequel la plateforme (17) comprend une partie proximale (24), proche de l'ouverture (5), une partie médiane (25), et une partie distale (26) la plus éloignée de ladite ouverture (5), et comprend le joint (18) disposé à l'extrémité de ladite partie proximale (24), ledit joint (18), ou une partie dudit joint (18), affleurant ladite plateforme (17) et les moyens (7) de réception d'un ou des produits à cuire.

4. Le four (1) selon l'une quelconque des revendications précédentes, dans lequel le joint (18) comprend en outre une arête s'étendant sensiblement perpendiculairement au plan formé par la plateforme (17) et le long du joint (18), ou partie du joint (18), et dont un flan entre en contact avec la première paroi (11) ou la seconde paroi (12) des moyens (10) d'obturation, quand lesdits moyens (10) d'obturation sont dans la position « fermée ».

5. Le four (1) selon l'une quelconque des revendications 1 à 3, dans lequel le joint (18) comprend en outre un bourrelet (19) s'étendant sensiblement perpendiculairement au plan formé par la plateforme, et le long du joint (18), ou partie du joint (18), et dont une pente entre en contact avec une extrémité biaisée du bord inférieur (13) des moyens (10) d'obturation, quand lesdits moyens (10) d'obturation sont dans la position « fermée ».

6. Le four (1) selon l'une quelconque des revendications précédentes, dans lequel le joint (18) est disposé dans une gorge (20) aux bords évasés.

7. Le four (1) selon l'une quelconque des revendications précédentes, dans lequel le joint (18), l'arête ou le bourrelet (19) s'ils sont présents, comprennent ou sont faits de silicone.

8. Le four (1) selon l'une quelconque des revendications précédentes, dans lequel la plateforme (17) s'étend sensiblement horizontalement dans le prolongement du plan (P) ou s'étend dans un plan oblique, formant avec ledit plan (P) un angle α compris entre 0,1 et 10 degré, ladite plateforme (17) comprenant une partie proximale (24), une partie médiane (25) et une partie distale (26), se trouvant, les unes par rapport à autres, dans un même plan, ou sensiblement dans un même plan.

9. Le four (1) selon l'une quelconque des revendications 1 à 7, dans lequel la plateforme (17) comprend une partie proximale (24) s'étendant depuis l'ouverture (5), sensiblement dans le prolongement du plan (P) ou s'étendant selon un plan oblique par rapport au plan (P) selon un angle α compris entre 0,1 et 10 degrés, une partie médiane (25) s'étendant dans un plan parallèle, ou sensiblement parallèle, au plan (P), ou s'étendant selon un plan oblique par rapport au plan (P) selon un angle β qui est compris entre 0,1 et 10 degrés, une partie distale (26) s'étendant dans un plan parallèle, ou sensiblement parallèle, au plan (P), ou s'étendant selon un plan oblique par rapport au plan (P) selon un angle γ qui est compris entre 0,1 et 10 degrés.

10. Le four (1) selon l'une quelconque des revendications précédentes, comprenant en outre un joint (22) venant en contact avec le bord supérieur (14) des moyens (10) d'obturation, lorsque lesdits moyens (10) d'obturation sont dans la position « fermée ».

11. Le four (1) selon la revendication 10, dans lequel le joint (22) comprend une section transversale carrée ou rectangle, et dans lequel le contact avec les moyens (10) d'obturation se fait par l'extrémité plane ou biaisée du bord supérieur (14).

12. Le four (1) selon l'une quelconque des revendications précédentes, dans lequel les moyens (10) d'obturation sont aptes à pivoter selon un axe de pivotement (15) et passent de la position « ouverte » à la position « fermée », et inversement, par un mouvement battant.

13. Le four (1) selon l'une quelconque des revendications précédentes, dans lequel les moyens (7) de réception d'un ou des produits à cuire comprennent au moins une sole (9).

14. Le four (1) selon l'une quelconque des revendications précédentes, étant un four de boulangerie comprenant une multitude d'enceintes (2) identiques, disposées les unes sur les autres et fermées par des moyens (10) d'obturation distincts pour chaque enceinte (2).

## Patentansprüche

1. Ofen (1), umfassend Mittel (6) zur Erzeugung von Wärme, einen oder mehrere Behälter (2), umfassend Mittel (7) zur Aufnahme eines Produkts oder von Produkten zum Backen, die eine im Wesentlichen horizontale Ebene (P) definieren, eine Öffnung (5), eine Plattform (17), die sich vor der Öffnung (5), außerhalb des/der Behälter(s) (2) erstreckt, und umfassend eine kontinuierliche Fläche, mindestens eine Verbindung (18), die mit der Fläche der Plattform (17) bündig ist oder einen mit dieser bündigen Teil aufweist, Mittel (10) zum Verschluss der Öffnung (5), umfassend eine erste und eine zweite Wand (11 und 12), einen unteren Rand (13), einen oberen Rand (14) und seitliche Ränder, wobei die Mittel (10) zum Verschluss ausgelegt sind, um von einer Position, bezeichnet als "offen", in eine Position, bezeichnet als "geschlossen" und umgekehrt überzugehen, wobei der untere Rand (13) der Mittel (10) zum Verschluss, wenn sich diese in der "geschlossenen" Position befinden, in Kontakt mit der Verbindung (18) oder dem Teil der Verbindung (18) treten,die/der bündig mit der Fläche der Plattform (17) ist.

2. Ofen (1) nach Anspruch 1, wobei die Plattform (17) einen proximalen Teil (24), nahe der Öffnung (5), einen mittleren Teil (25) und einen distalen Teil (26) umfasst, der am weitesten von der Öffnung (5) entfernt ist und die Verbindung (18) umfasst, die auf dem Niveau des distalen Teils (26) oder des mittleren Teils (25) angeordnet ist.

3. Ofen (1) nach Anspruch 1, wobei die Plattform (17) einen proximalen Teil (24), nahe der Öffnung (5), einen mittleren Teil (25) und einen distalen Teil (26) umfasst, der am weitesten von der Öffnung (5) entfernt ist und die Verbindung (18) umfasst, die am Ende des proximalen Teils (24) angeordnet ist, wobei die Verbindung (18) oder ein Teil der Verbindung (18) bündig mit der Plattform (17) und den Mitteln (7) zur Aufnahme eines Produkts oder von Produkten zum Backen ist.

4. Ofen (1) nach einem beliebigen der vorhergehenden Ansprüche, wobei die Verbindung (18) außerdem eine Kante aufweist, die sich im Wesentlichen senkrecht zur Ebene, die von der Plattform (17) gebildet ist, und entlang der Verbindung (18) oder einem Teil der Verbindung (18) erstreckt, und wobei ein Ausschnitt mit der ersten Wand (11) oder der zweiten Wand (12) der Mittel (10) zum Verschluss in Kontakt tritt, wenn sich die Mittel (10) zum Verschluss in der "geschlossenen" Position befinden.

5. Ofen (1) nach einem beliebigen der Ansprüche 1 bis 3, wobei die Verbindung (18) außerdem einen Wulst (19) umfasst, der sich im Wesentlichen senkrecht zu Ebene, die von der Plattform gebildet ist, und entlang der Verbindung (18) oder einem Teil der Verbindung (18) erstreckt, und wobei eine Neigung mit einem abgeschrägten Ende des unteren Rands (13) der Mittel (10) zum Verschluss in Kontakt tritt, wenn sich die Mittel (10) zum Verschluss in der "geschlossenen" Position befinden.

6. Ofen (1) nach einem beliebigen der vorhergehenden Ansprüche, wobei die Verbindung (18) in einer Auskehlung (20) mit ausgestellten Rändern angeordnet ist.

7. Ofen (1) nach einem beliebigen der vorhergehenden Ansprüche, wobei die Verbindung (18), die Kante oder der Wulst (19), falls vorhanden, Silikon umfassen oder daraus hergestellt sind.

8. Ofen (1) nach einem beliebigen der vorhergehenden Ansprüche, wobei sich die Plattform (17) im Wesentlichen horizontal in der Verlängerung der Ebene (P) erstreckt oder sich in einer schrägen Ebene erstreckt, die mit der Ebene (P) einen Winkel α bildet, der zwischen 0,1 und 10 Grad liegt, wobei die Plattform (17) einen proximalen Teil (24), einen mittleren Teil (25) und einen distalen Teil (26) umfasst, die sich in Bezug aufeinander auf einer gleichen Ebene oder im Wesentlichen auf einer gleichen Ebene befinden.

9. Ofen (1) nach einem beliebigen der Ansprüche 1 bis 7, wobei die Plattform (17) einen proximalen Teil (24) umfasst, der sich von der Öffnung (5) im Wesentlichen in der Verlängerung der Ebene (P) erstreckt oder sich gemäß einer schrägen Ebene mit Bezug auf die Ebene (P) gemäß einem Winkel α erstreckt, der zwischen 0,1 und 10 Grad liegt, wobei sich ein mittlerer Teil (25) in einer parallelen oder im Wesentlichen parallelen Eben zur Ebene (P) erstreckt oder sich gemäß einer schrägen Ebene mit Bezug auf die Ebene (P) gemäß einem Winkel β erstreckt, der zwischen 0,1 und 10 Grad liegt, einen distalen Teil (26), der sich in einer parallelen oder im Wesentlichen parallelen Eben zur Ebene (P) erstreckt oder sich gemäß einer schrägen Ebene mit Bezug auf die Ebene (P) gemäß einem Winkel γ erstreckt.

10. Ofen (1) nach einem beliebigen der vorhergehenden Ansprüche, außerdem umfassend eine Verbindung (22), die mit dem oberen Rand (14) der Mittel (10) zum Verschluss in Kontakt kommt, wenn sich die Mittel (10) zum Verschluss in der "geschlossenen" Position befinden.

11. Ofen (1) nach Anspruch 10, wobei die Verbindung (22) einen quadratischen oder rechtwinkligen Querschnitt umfasst, und wobei der Kontakt mit den Mitteln (10) zum Verschluss durch das ebene oder abgeschrägte Ende des oberen Rands (14) erfolgt.

12. Ofen (1) nach einem beliebigen der vorhergehenden Ansprüche, wobei die Mittel (10) zum Verschluss ausgelegt sind, um gemäß einer Schwenkachse (15) zu schwenken, und von der "offenen" Position in die "geschlossene" Position und umgekehrt durch eine schlagende Bewegung übergehen.

13. Ofen (1) nach einem beliebigen der vorhergehenden Ansprüche, wobei die Mittel (7) zur Aufnahme eines Produkt oder von Produkten zum Backen mindestens eine Sohle (9) umfassen.

14. Ofen (1) nach einem beliebigen der vorhergehenden Ansprüche, wobei es sich um einen Bäckerofen handelt, umfassend eine Vielzahl von identischen Behältern (2), die aufeinander angeordnet und durch Mittel (10) zum Verschluss, die für jeden Behälter (2) verschieden sind, geschlossen sind.

## Claims

1. An oven (1) comprising means (6) for producing heat, one or more enclosures (2) comprising means (7) for receiving one or more products to be cooked, defining a substantially horizontal plane (P), an opening (5), a platform (17) extending in front of said opening (5), outside said enclosure(s) (2) and comprising a continuous surface, at least one seal (18), flush with or having a part flush with said surface of the platform (17), means (10) closing said opening (5) comprising a first and a second wall (11 and 12), a lower edge (13), an upper edge (14) and side edges, said closing means (10) being able to go from a so-called "open" position to a so-called "closed" position, and vice versa, said lower edge (13) of said closing means (10), when the latter are in the "closed" position, coming into contact with said seal (18), or said part of said seal (18), which is flush with the surface of the platform (17).

2. The oven (1) according to claim 1, wherein the platform (17) comprises a proximal part (24), close to the opening (5), a median part (25), and a distal part (26) furthest from said opening (5), and comprises the seal (18) arranged at said distal part (26) or said median part (25).

3. The oven (1) according to claim 1, wherein the platform (17) comprises a proximal part (24), close to the opening (5), a median part (25), and a distal part (26) furthest from said opening (5), and comprises the seal (18) arranged at the end of said proximal part (24), said seal (18), or a part of said seal (18), being flush with said platform (17) and the means (7) for receiving one or more products to be cooked.

4. The oven (1) according to any one of the preceding claims, wherein the seal (18) further comprises a rim extending substantially perpendicular to the plane formed by the platform (17) and along the seal (18), or part of the seal (18), and a blank of which comes into contact with the first wall (11) or the second wall (12) of the closing means (10), when said closing means (10) are in the "closed" position.

5. The oven (1) according to any one of claims 1 to 3, wherein the seal (18) further comprises a bead (19) extending substantially perpendicular to the plane formed by the platform, and along the seal (18), or part of the seal (18), and a slope of which comes into contact with a biased end of the lower edge (13) of the closing means (10), when said closing means (10) are in the "closed" position.

6. The oven (1) according to any one of the preceding claims, wherein the seal (18) is arranged in a groove (20) with flared edges.

7. The oven (1) according to any one of the preceding claims, wherein the seal (18), the rim or the bead (19) if they are present, comprise or are made from silicone.

8. The oven (1) according to any one of the preceding claims, wherein the platform (17) extends substantially horizontally in the extension of the plane (P) or extends in an oblique plane, forming, with said plane (P), an angle α between 0.1 and 10 degrees, said platform (17) comprising a proximal part (24), a median part (25) and a distal part (26), being located, relative to one another, in a same plane, or substantially in a same plane.

9. The oven (1) according to any one of claims 1 to 7, wherein the platform (17) comprises a proximal part (24) extending from the opening (5), substantially in the extension of the plane (P) or extending along an oblique plane relative to the plane (P) along an angle α between 0.1 and 10 degrees, a median part (25) extending in a plane parallel, or substantially parallel, to the plane (P), or extending along a plane that is oblique relative to the plane (P) along an angle β that is between 0.1 and 10 degrees, a distal part (26) extending in a plane parallel, or substantially parallel, to the plane (P), or extending along a plane that is oblique relative to the plane (P) along an angle γ that is between 0.1 and 10 degrees.

10. The oven (1) according to any one of the preceding claims, further comprising a seal (22) coming into contact with the upper edge (14) of the closing means (10), when said closing means (10) are in the "closed" position.

11. The oven (1) according to claim 10, when the seal (22) comprises a square or rectangular cross-section, and wherein the contact with the closing means (10) is done by the flat or biased end of the upper edge (14).

12. The oven (1) according to any one of the preceding claims, wherein the closing means (10) are able to pivot along a pivot axis (15) and to go from the "open" position to the "closed" position, and vice versa, through a swinging movement.

13. The oven (1) according to any one of the preceding claims, wherein the means (7) for receiving one or more products to be cooked comprise at least one shelf (9).

14. The oven (1) according to any one of the preceding claims, being a bakery oven comprising a multitude of identical enclosures (2), arranged above one another and closed by separate closing means (10) for each enclosure (2).
